(19) Europäisches Patentamt
European Patent Office
Office européen des brevets

(11) **EP 2 147 346 B1**

(12) **EUROPÄISCHE PATENTSCHRIFT**

(45) Veröffentlichungstag und Bekanntmachung des Hinweises auf die Patenterteilung:
**29.06.2011 Patentblatt 2011/26**

(21) Anmeldenummer: **08749026.4**

(22) Anmeldetag: **21.04.2008**

(51) Int Cl.:
*G02B 23/26* (2006.01)     *G02B 27/00* (2006.01)

(86) Internationale Anmeldenummer:
**PCT/EP2008/003189**

(87) Internationale Veröffentlichungsnummer:
**WO 2008/148444 (11.12.2008 Gazette 2008/50)**

(54) **VORRICHTUNG UND VERFAHREN ZUR KOMPENSATION VON FARBVERSCHIEBUNGEN IN FASEROPTISCHEN ABBILDUNSSYSTEMEN**

DEVICE AND METHOD FOR COMPENSATING COLOR DISPLACEMENTS IN FIBER OPTIC IMAGING SYSTEMS

DISPOSITIF ET PROCÉDÉ POUR COMPENSER DES DÉCALAGES DE COULEUR DANS DES SYSTÈMES D'IMAGERIE À FIBRES OPTIQUES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **08.06.2007 DE 102007026595**

(43) Veröffentlichungstag der Anmeldung:
**27.01.2010 Patentblatt 2010/04**

(73) Patentinhaber:
• **Fraunhofer-Gesellschaft zur Förderung der angewandten Forschung e.V.**
**80686 München (DE)**
• **Friedrich-Alexander-Universität Erlangen-Nürnberg**
**91054 Erlangen (DE)**

(72) Erfinder:
• **WINTER, Christian**
**91080 Uttenreuth (DE)**
• **ZERFASS, Thorsten**
**55566 Bad Sobernheim (DE)**

(74) Vertreter: **Schenk, Markus et al**
**Schoppe, Zimmermann, Stöckeler & Zinkler**
**Patentanwälte**
**Postfach 246**
**82043 Pullach bei München (DE)**

(56) Entgegenhaltungen:
JP-A- 1 223 932     JP-A- 6 331 907
JP-A- 8 191 439     JP-A- 8 191 440

## Beschreibung

Die vorliegende Erfindung befasst sich mit einer Vorrichtung und einem Verfahren, um Farbverschiebungen, wie sie sich bei einem Einsatz von Fiberskopen mit Farbbildkameras ergeben, zu kompensieren.

Optische Systeme, bei denen ein Bild über eine Optik auf einen bildgebenden Sensor transferiert wird, sind vielfach im Einsatz. Ohne den bildgebenden Einsatz von Endoskopen wären heute viele Anwendungen unter anderem im Bereich der Diagnostik, Inspektion, Qualitätssicherung und Forschung undenkbar. Dabei werden zum einem linsenoptische Systeme verwendet, also Systeme mit einem starren Aufbau innerhalb dessen das Bild durch eine Linsenanordnung ähnlich einem Objektiv einer Kamera auf den Sensor übertragen wird. Zum anderen kommen faseroptische Systeme zum Einsatz, die aus einer großen Anzahl geordneter lichtleitender in einem Bündel zusammengefasster Fasern bestehen, wobei das Licht durch die Vielzahl von Fasern auf einen Sensor geleitet wird.

Die derzeitige Präferenz für linsenoptische Systeme liegt unter anderem in deren Bildqualität begründet. Wo ein im wortwörtlichen Sinne weitaus " flexiblerer" Einsatz gefordert ist (kleiner, schwieriger Zugang) muss auf hochwertige halbstarre oder biegsame Endoskope (Fiberskope) mit geringen Arbeitsdurchmessern und Glasfaser-Bildleitern zurückgegriffen werden. Beim Einsatz eines solchen faseroptischen Systems aus mehreren Bildleitern wird typischerweise je einzelnem verwendeten Bildleiter ein einzelner Bildpunkt bzw. ein einzelner Intensitätswert übertragen. Bei vertretbaren Durchmessern des gesamten Faserbündels kann keine beliebig große Anzahl von einzelnen Fasern verwendet werden. Die dadurch bedingte verringerte Auflösung bzw. die durch die Anordnung der Lichtfaser vom Sensor aufgezeichnete Wabenstruktur behindern teilweise den Einsatz solcher Geräte.

So bestehen beispielsweise die Bildleiter hochwertiger Fiberskope aus einem regelmäßig geordneten Bündel von etwa 3.000 - 20.000 Einzelfasern. Demgegenüber hat eine typische (niedrig auflösende) herkömmliche Bewegtbildkamera beispielsweise 640 x 480, also mehr als 300.000 Bildpunkte (VGA) und üblicherweise wird das mittels der Fasern transportierte Bildsignal mit einer solchen Bewegtbildkamera beobachtet.

Die einzelnen Lichtleiter weisen meist eine Ummantelung auf, so dass sich aus der Ummantelung störende Strukturen in dem beobachteten Bild ergeben, die beispielsweise durch Tiefpassfilter geglättet oder adaptiv durch spektrale Maskierung reduziert werden können. Um die durch die wabenförmige Struktur eingeführten und zur Beurteilung eines Bildes höchst störenden Strukturen zu entfernen, existieren bereits Lösungen, die auf der Basis von zunächst lokalisierten Faserzentren ein wabenfreies Bild auf der Grundlage der Helligkeitsinformation an den Faserzentren interpolieren. Ebenso wie die Glättung der wabenförmigen Ummantelungsstrukturen oder durch deren Maskierung im Fourierraum haben diese Verfahren jedoch den Nachteil, dass sie zwar die Darstellungsqualität des aufgenommenen Bildes erhöhen, jedoch keine tatsächliche Auflösungssteigerung des Bildes erreichen.

Ein Problem, das es generell zu lösen gilt, wird in der deutschen Patentschrift DE 4318140 A1 behandelt. Dort wird beschrieben, wie die Zentren der Lichtpunkte die durch die einzelnen Glasfasern auf einen höher auflösenden Sensor abgebildet werden dadurch bestimmt werden können, dass eine geeignete Funktion an die Helligkeitsverteilung, die auf dem zweidimensionalen Sensor von einer einzelnen Lichtleitfaser erzeugt wird, angepasst wird. Die Patentschrift zeigt, wie auf der Basis der angepassten Faserkoordinaten eine Zuordnung der Lage der Fasern auf der Eingangsseite des Lichtfaserbündels zu der Position der von den Fasern auf dem Sensor hervorgerufenen Lichtpunkte möglich ist.

Für die Darstellung und rechnergeschützte Weiterverarbeitung der mittels fiberskopischer Endoskope aufgenommenen Bilder ist eine möglichst strukturfreie Darstellung erwünscht. Aufgrund der großen industriellen Bedeutung der Fiberskope zur Inspektion von Hohlräumen technischer Bauteile als auch zur medizinischen Diagnostik und Therapie von inneren Organen bzw. der Verwendung als Positionierungshilfe in der Automatisierung wird zunehmend auch eine hochqualitative Echtfarbdarstellung des mittels des Endoskop erzeugten Bildes gefordert.

Die bislang verwendeten Algorithmen und Verfahren verwenden zur Bildaufbereitung Grauwertbilder bzw. die einzelnen Farbkanäle eines mehrkanaligen Farbbildes, d. h. sie verwenden lediglich monochromatische Intensitätswerte eines Bildes.

Farbkameras, d. h. Sensoren mit mehreren Intensitätskanälen (Sensorelementen, die auf jeweils unterschiedliche Spektralbereiche sensitiv sind) können mit den bekannten Verfahren in ihrer bisherigen Form nicht verwendet werden. Bei einem bis jetzt verfolgten alternativen Ansatz zur Verwendung von Farbaufnahmen wird eine Filterung bzw. eine Interpolation zur Aufbereitung von faseroptischen Aufnahmen einer Farbkamera auf den einzelnen Farbkanälen eines Bildes (beispielsweise der Grundfarben Rot, Grün und Blau) durchgeführt. Die separat erzeugten Bilder der einzelnen Farbkanäle werden anschließend kombiniert, um zu einem mehrkanaligen Farbbild zu gelangen. Dieses Vorgehen führt jedoch hinsichtlich der Farbechtheit der erzeugten Bilder nicht zu optimalen Ergebnissen. Soll ein derart erzeugtes Bild beispielsweise einer visuellen Weiterverwendung, einer Bewertung der Bilddaten oder einer Extraktion und Verarbeitung von Farbmerkmalen verwendet werden, gelingt dies aufgrund der Farbverschiebungen, die sich durch einfache Kombination eines Fiberskops mit einer Farbkamera ergeben, nur unzufriedenstellend.

Dieser Ansatz scheitert an den Falschfarben, die durch das Muster der Sensorelemente mit unterschiedlicher spektraler Empfindlichkeit und die ungleichmäßige Ausleuchtung der Sensorelemente durch eine einzelne Lichtleitfaser hervorgerufen werden. Beispielsweise ist bei CCD-Sensoren und CMOS-Sensoren eine Anordnung der im roten, grünen und blauen Spektralbereich sensitiven Pixel im so genannten Bayer-Pattern üblich. Dieses Muster zeichnet sich dadurch aus, dass in einer zwei-dimensionalen Matrix aus Sensorelementen Sensorelemente identischer spektraler Empfindlichkeit weder in horizontaler noch in vertikaler Richtung aneinander grenzen. Dabei werden Pixel verwendet, die auf rotes, grünes und blaues Licht sensitiv sind, wobei die Anzahl der auf grünes Licht sensitiven Pixel überwiegt und genau doppelt so hoch ist wie die Anzahl der rotempfindlichen bzw. der blauempfindlichen Pixel. Wie weiter unten genauer beschrieben wird, führt eine ungleichmäßige Ausleuchtung eines solchen Farbmusters und die auf eine gleichmäßige Ausleuchtung optimierte Bildverarbeitungselektronik der Farbkamera dazu, dass der Sensor bzw. die Farbkamera für die von einer einzelnen Lichtleitfaser beleuchteten Sensorelemente eine farbverfälschte Bildinformation erzeugt.

Bei der Digitalisierung der Abbildung durch ein Faserbündel wird das Problem noch verschärft, da die Bildgebung vor einen Kompromiss gestellt ist. Würde eine einzelne Faser direkt und ausschließlich auf einem einzigen Sensorelement enden, könnte die Intensität elektronisch exakt bestimmt werden. Jedoch wäre für die entsprechende Lichtleitfaser nur für eine Farbkomponente die Bestimmung eines Farbwertes möglich. Das heißt, es wäre physikalisch zwar bekannt, um welche Farbkomponente es sich handelt, allerdings kann über die Farbzusammensetzung keine Aussage getroffen werden. Um einen Farbwert zu bestimmen, ist es also wünschenswert, jede Faser auf mehrere Sensorelemente (beispielsweise auf 3 x 3 oder 5 x 5 Sensorelemente) abzubilden. Jedoch entsteht aus der Ungleichgewichtung von stimulierten Sensorelementen nach der Umrechnung von Intensitätsrohdaten des Bayer-Patterns zu Farbwerten eine unerwünschte Farbverschiebung.

Dies rührt daher, dass aufgrund der unregelmäßigen Geometrie der Lichtleitfasern innerhalb des Fiberskops die einzelnen Pixel der Kamera nicht mit identischer Intensität beleuchtet werden. Während von einer Faser beispielsweise vier rotsensitive Pixel beleuchtet werden, ist es möglich, dass die benachbarte Faser lediglich drei rotsensitive Pixel beleuchtet. Wird aus den so beleuchteten Pixeln unter der Annahme einer gleichmäßigen Beleuchtung (wie sie dem in einer Farbkamera arbeitenden Algorithmus zugrunde liegt) ein Farbwert bzw. mehrere Farbwerte errechnet, führt dies unweigerlich zu einer unerwünschten Farbverschiebung. Diese Farbverschiebung wird vom Betrachter als äußerst störend wahrgenommen und führt auch durch abrupte Farbänderungen (Merkmalen im Bild) zu weiteren unerwünschten Effekten.

Soll beispielsweise aufgrund von einem solchen farbverfälschten Bild eine Bewegungskompensation bzw. Bewegungsschätzung durchgeführt werden, ist dies kaum möglich, da die Bewegungsschätzung gerade darauf basiert, identische Intensitätsmuster in unterschiedlichen Bildbereichen verschiedener folgender Aufnahmen zu finden. Sind die einzelnen Aufnahmen in sich farbverfälscht, weisen also eine verfälschte Intensität auf, kann auch der Bewegungskompensationsalgorithmus zu keinem zuverlässigen Ergebnis gelangen.

Die beiden japanischen Patentanmeldungen JP-A-08101439 und JP-A-08191440 schlagen vor, eine Farbkorrektur eines Farbwertes, der dem Zentrum einer fiberskopischen Abbildung zugeordnet ist, durchzuführen, bevor das Bild dargestellt wird. Dabei wird lediglich die Farbinformation eines einzigen, dem Zentrum der Faser zugeordneten Punkts auf dem Sensor verwendet, um als Ausgangspunkt für die Farbkorrektur zu gelten. Sensorelemente unterschiedlicher farblicher Selektivität werden nicht verwendet. Stattdessen wird der von dem verwendeten Sensor direkt erzeugte Farbwert der Kalibration zugrunde gelegt.

Es ist die Aufgabe der vorliegenden Erfindung, eine Vorrichtung und ein Verfahren bereitzustellen, die es ermöglichen, zuverlässig einen einer Lichtleitfaser eines Fiberskops zugeordneten Farbwert zu erzeugen.

Diese Aufgabe wird durch eine Vorrichtung gemäß Patentanspruch 1 oder 7, durch ein Verfahren, gemäß Patentanspruch 13 oder 14 oder durch ein Computerprogramm gemäß Patentanspruch 15 gelöst.

Einigen Ausführungsbeispielen der vorliegenden Erfindung liegt dabei die Erkenntnis zugrunde, dass ein Farbwert für eine Lichtleitfaser eines Fiberskops basierend auf den Intensitätswerten einer Mehrzahl von auf jeweils einen Spektralbereich aus einer Menge von Sensorspektralbereichen sensitiven Sensorelemente einer Sensorelementanordnung erzeugt werden kann, wenn Kalibrationswerte für jeden der Spektralbereiche bereitgestellt werden, die der Lichtleitfaser zugeordnet sind. Mit den bereitgestellten Kalibrationswerten können die Intensitätswerte aller von dem Lichtleiter beleuchteten Sensorelemente des jeweiligen Spektralbereichs kombiniert werden, um den der Lichtleitfaser zugeordneten Farbwert zu erhalten, welcher die Farbe des von der Lichtleitfaser transportierten Lichts fehlerfrei wiedergibt.

Ein Farbwert im Sinne der vorliegenden Beschreibung ist dabei jede Größe, die es ermöglicht, eine Position in einem beliebigen Farbraum eindeutig zu bestimmen. Dies können beispielsweise Tripel von Zahlen im Falle des RGB und YUV Farbraums sein. Dabei sind selbstverständlich auch Repräsentationen möglich, die mehr als drei Grundfarben bzw. mehr als drei Größen verwenden, um eine die Farbe zu charakterisieren.

Ferner ist das Konzept nicht darauf beschränkt, Farben im sichtbaren Spektralbereich zu verwenden. Beispielsweise kann das Verfahren auch im infraroten Spektralbereich oder im ultravioletten Spektralbereich dazu verwendet werden, Farbwerte zu bestimmen, die frei von Verfälschungen sind.

Bei Verwendung von Sensoren für nicht-sichtbare Spektralbereiche kann eine Visualisierung durch eine Falschfarbendarstellung vorgenommen werden, beziehungsweise es kann ein einfaches Mapping des nicht-sichtbaren Spektralbereichs auf den sichtbaren Spektralbereich dazu verwendet werden, die im nicht-sichtbaren Spektralbereich gewonnenen Intensitätswerte zu visualisieren und beispielsweise zur medizinischen Diagnostik zu verwenden. Dadurch wird auch bei Verwendung von nicht-sichtbaren elektromagnetischen Wellen die Bildqualität signifikant erhöht, da kleinere Details, die sonst vom Farbrauschen maskiert werden könnten, in der Aufnahme erkennbar sind bzw. bei Verwendung des erfindungsgemäßen Konzepts erkennbar werden.

Unabhängig vom verwendeten Spektralbereich ist es auch für eine Bewegungserkennung, die möglicherweise auf Grundlage der ermittelten Intensitätswerte durchgeführt wird, vorteilhaft, wenn die Verfälschung von Farbwerten verhindert werden kann. Dabei kann die Bewegungserkennung auch auf Intensitäts- oder Farbwerten basieren, die im nichtsichtbaren Spektralbereich gewonnen wurden.

Gemäß einem Ausführungsbeispiel der Erfindung wird eine Anordnung bestehend aus einer Lichtleitfaser und einer am Okular der Lichtleitfaser angebrachten Farbkamera vor Beginn der eigentlichen Messung kalibriert, wozu das Faserbündel mit weißem Licht bekannter spektraler Zusammensetzung homogen beleuchtet wird. Bei Kenntnis der spektralen Zusammensetzung des zur Kalibration verwendeten Lichts kann dann eine Farbeichung der der jeweiligen Lichtleitfaser zugeordneten Sensorelemente bzw. Pixel vorgenommen werden, da der von den Pixeln zu reproduzierende Farbwert genau bekannt ist. Wird beispielsweise weißes Licht verwendet, kann in einem einfachen Verfahren bei Sensorelementen, die auf Rot, Grün und Blau sensitiv sind, angenommen werden, dass jeder der Farbkanäle, die von den einzelnen Sensorelementen nachgewiesen werden können, in gleicher Stärke zur Gesamtintensität beitragen muss. Ein Farbwert für weißes Licht wird dann durch ein Tripel von Intensitätswerten repräsentiert, wobei jeder Intensitätswert denselben Wert aufweist. Bei Verwendung von weißem Licht und einem RGB-Sensor ist es somit möglich, einen mathematisch einfachen Algorithmus zur Kalibration zu verwenden, da dabei davon ausgegangen werden kann, dass nach der Kalibration jeder Farbkanal mit gleicher Intensität zum Ausleseergebnis beitragen soll, so dass für jeden Farbkanal Korrekturfaktoren durch einfache Rechnung zu bestimmen sind, die dazu führen, dass nach einer Korrektur jeder Farbkanal ein Drittel der gesamten nachgewiesenen Intensität einer Lichtleitfaser enthält, wenn weißes Licht verwendet wird.

Bei einem weiteren Ausführungsbeispiel wird zur Kalibration Licht verwendet, welches keine weiße Erscheinung besitzt. Wichtig ist lediglich, dass die spektrale Zusammensetzung des verwendeten Lichts bekannt ist, um die einer Lichtleitfaser zugeordneten Sensorelemente zu kalibrieren, bzw. um einen Kalibrationsfaktor zu bestimmen, der jedem der Spektralbereiche aus der Menge der Sensorspektralbereiche der betreffenden Lichtleitfaser zugeordnet ist. Das Verwenden von Licht, das nicht weiß ist, kann dabei den Vorteil haben, dass Licht verwendet werden kann, welches in etwa diejenige Farbzusammensetzung aufweist, die mit dem Fiberskop im Messeinsatz typischerweise beobachtet wird. Werden beispielsweise endoskopische Untersuchungen an hautfarbigen Gewebeteilen durchgeführt, kann es vorteilhaft sein, Licht mit einer rötlichen bis rosafarbigen Erscheinung zur Kalibration zu verwenden, da die Kalibrationswerte dann mit Licht einer spektralen Zusammensetzung bestimmt werden, die während der Messungen tatsächlich beobachtet wird. Die führt zu besseren Ergebnissen in der Rekonstruktion und es kann beispielsweise die Farbechtheit der Aufnahmen im Messbetrieb noch verbessert werden.

Bei einem weiteren Ausführungsbeispiel der vorliegenden Erfindung wird die Kalibration nicht durch eine Summation der Intensitätswerte der den jeweiligen Spektralbereichen zugeordneten Pixel durchgeführt. Vielmehr wird ein histogrammbasierter Ansatz verfolgt, d. h., an die Häufigkeit der auftretenden Intensitätswerte eines Spektralbereichs wird eine Funktion angepasst (beispielsweise eine Gauss-Funktion), welche die von einer Lichtleitfaser auf der Oberfläche eines Farb-Sensors hervorgerufene Intensitätsverteilung widerspiegelt. Erlaubt die Statistik eine Anpassung einer solchen Intensitätsfunktion für jede Farbe, d. h. werden ausreichend Sensorelemente von einer einzigen Lichtleitfaser beleuchtete, erlaubt dieses Verfahren, beispielsweise durch Vergleich der gefundenen Parameter der zu fittenden Funktion, eine genaue Bestimmung der Kalibrationswerte.

Bei einem weiteren Ausführungsbeispiel der vorliegenden Erfindung wird zusätzlich für jedes Sensorelement, das von einer Lichtleitfaser beleuchtet wird, ein Profilgewichtungsfaktor bereitgestellt, der der Tatsache Rechnung trägt, dass die mittels einer Lichtleitfaser auf der Oberfläche eines Sensors bzw. einer Sensoranordnung erzeugte Intensitätsverteilung, unabhängig von der Farbe, zu den Rändern hin abnimmt. Der Profilgewichtungsfaktor kann dann zusätzlich zum Kalibrationsfaktor, der spektralbereichspezifisch ist, verwendet werden, um bei der Bestimmung des der Lichtleitfaser zugeordneten Farbwertes auch die durch die Geometrie der Lichtleitfaser hervorgerufene Intensitätsverteilung des mittels einer Lichtleitfaser transportierten Lichtes zu berücksichtigen.

Bei einem weiteren Ausführungsbeispiel der vorliegenden Erfindung werden von einer Kalibrationsvorrichtung für jede Lichtleitfaser eines Fiberskops Kalibrationswerte für jeden Spektralbereich der von einem Sensor unterstützten Sensorspektralbereiche einer Sensorelementanordnung erzeugt. Dazu wird die Lichtleitfaser mit Licht bekannter spektraler Zusammensetzung beleuchtet und von einer Auswerteeinrichtung werden Kalibrationswerte für die jeweiligen Spektralbereiche bestimmt, so dass ein Farbwert, der durch die mit den Kalibrationswerten kalibrierten Intensitätswerte der beleuchteten Sensorelemente gebildet werden kann, die spektrale Zusammensetzung des Lichtes wiedergibt.

Bevorzugte Ausführungsbeispiele der vorliegenden Erfindung werden nachfolgend, Bezug nehmend auf die beiliegenden Zeichnungen, näher erläutert. Es zeigen:

Fig. 1    die Abbildung einer Lichtleitfaser auf einer Sensorelementanordnung;

Fig. 2    ein Ausführungsbeispiel einer Kalibrationsvor- richtung;

Fig. 3    ein Ausführungsbeispiel einer Vorrichtung zum Erzeugen eines einer Lichtleitfaser zugeordneten Farbwertes;

Fig. 4    ein Beispiel eines Verfahrens zum Bestimmen von Kalibrationswerten; und

Fig. 5    ein Beispiel eines Verfahrens zum Erzeugen eines einer Lichtleitfaser zugeordneten Farbwertes.

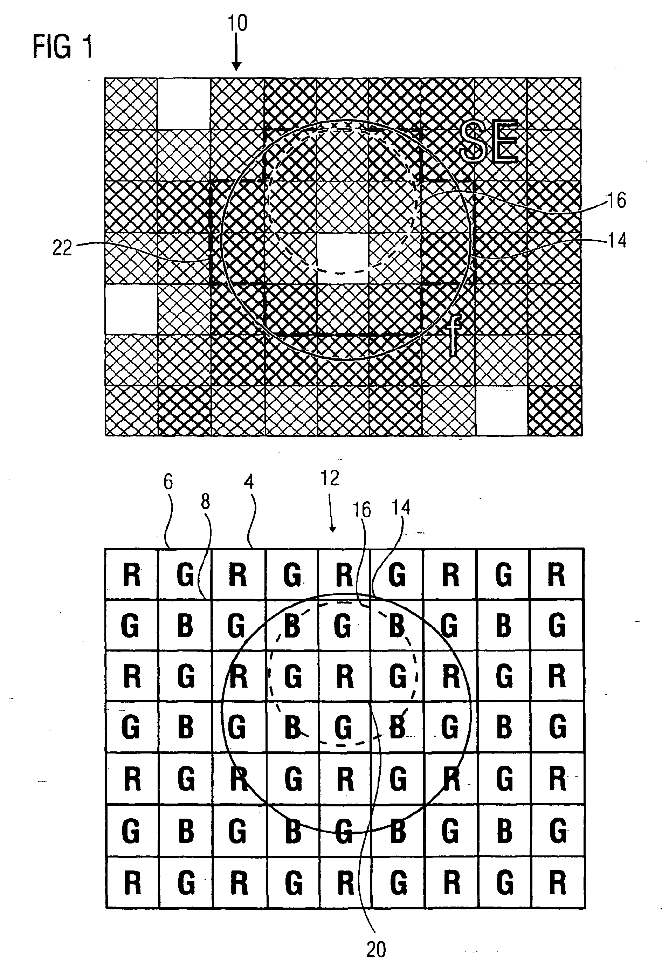

Fig. 1 zeigt als Beispiel die Abbildung einer Lichtleitfaser auf der Oberfläche einer Sensorelementanordnung, die aus Sensorelementen mit unterschiedlicher spektraler Empfindlichkeit besteht. Als Beispiel ist, ohne Beschränkung der Allgemeinheit, ein Sensor mit matrixförmig angeordneten Sensorelementen dargestellt, die auf Rot (beispielsweise mit R markiertes Sensorelement 4), Grün (beispielsweise mit G markiertes Sensorelement 6) und auf Blau (beispielsweise mit B markiertes Sensorelement 8) sensitiv sind. In der in Fig. 1 gezeigten Anordnung sind die rot-, grün- und blausensitiven Pixel bzw. Sensorelemente in dem so genannten Bayer-Muster angeordnet. Diese Anordnung ist lediglich exemplarisch zu verstehen. Weitere Ausführungsbeispiele der Erfindung können auf jeder Sensoranordnung basieren, beispielsweise auf matrixförmigen Sensoranordnungen mit einer anderen geometrischen Anordnung der auf unterschiedliche Spektralbereiche sensitiven Sensorelemente. Auch müssen die einzelnen Sensorelemente nicht quadratisch sein, diese können beispielsweise quaderförmig oder hexagonal sein, wobei es im letzteren Fall möglich ist, die Sensorelemente geometrisch anders anzuordnen. Eine günstige Anordnung ist, diese nicht in Form einer Matrix anzuordnen, sondern vielmehr so, dass jede der Seiten der hexagonalen Sensorelemente an ein anderes benachbartes Sensorelement angrenzt, so dass die gesamte zur Verfügung stehende Fläche der Sensorelementanordnung lückenlos mit Sensorelementen bedeckt ist.

Fig. 1 zeigt in der linken Bildhälfte eine Graustufenabbildung 10 einer in der rechten Bildhälfte detailliert dargestellten Sensorelementanordnung 12, bei der die rot-, blau- und grünempfindlichen Pixel im Bayer-Muster angeordnet sind. In den Abbildungen ist schematisch die Kontur einer zur Belichtung der Sensorelementanordnung verwendeten Lichtleitfaser 14 (f) dargestellt. Ferner ist, um den Effekt bzw. die Ursache der Farbverfälschung bei Belichtung mittels einer Lichtleitfaser zu verdeutlichen, eine alternative Lichtleitfaserkontur 16 gezeigt. Dabei basiert die in der linken Bildhälfte dargestellte Graustufenaufnahme 10 auf einer Belichtung, die mittels Lichtleitfaser 14 und weißem Licht durchgeführt wurde. Bei homogener Beleuchtung mit weißem Licht würden alle Sensorelemente der unterschiedlichen Spektralbereiche näherungsweise identische Intensitätswerte anzeigen. Im Zentrum der Kontur der Lichtleitfaser 14 ist in der Graustufendarstellung 10 diese Eigenschaft zu erkennen, da im zentralen Bereich der Lichtleitfaser 14 ein Intensitätsprofil erzeugt wird, das keine starken Gradienten aufweist. Daher sind in dem zentralen Bereich der Lichtleitfaser 14 die einzelnen Pixel, bzw. die den einzelnen Sensorelementen zugeordneten Intensitätswerte näherungsweise gleich hoch (hell). Zum Rand der Lichtleitfaser werden die Intensitäten geringer, wie der Graustufenabbildung 10 zu entnehmen ist. Dies ist in den lichtleitenden Eigenschaften der Lichtleitfaser begründet.

Der folgende kurze Absatz soll noch einmal erläutern, wie die Farbverschiebung bei der Belichtung eines herkömmlichen Farb-Sensorelements mittels einer Lichtleitfaser zu Stande kommt. Wie anhand der Darstellung 12 ersichtlich ist, werden die einzelnen Spektralbereiche (Farben) von der Sensorelementanordnung nicht am selben Ort, sondern an benachbarten Orten nachgewiesen. Dennoch muss der Farbwert, der im Fall des RGB-Farbraums aus einem Tripel von drei Intensitäten (für Rot, für Grün und für Blau) besteht, einem Punkt zugeordnet werden. Dazu sind die einzelnen nachgewiesenen Intensitäten zu interpolieren, um einen Farbwert für eine Ortskoordinate angeben zu können. Diese Interpolation wird normalerweise von der Kamera selbst vorgenommen, unter der Annahme, dass die gesamte Sensorfläche durch die verwendete Optik gleichmäßig beleuchtet ist. Unter diese Annahme ist es möglich, einen unverfälschten Farbwert unter Berücksichtigung der für den jeweiligen Spektralbereich sensitiven Pixelflächen und der innerhalb dieser Flächen nachgewiesenen Intensität zu berechnen. Dieses in der Kamera implementierte Verfahren geht bei einer Beleuchtung mittels Lichtleitfasern fehl, da hier, wie beispielsweise in der Graustufenabbildung 10 ersichtlich, die Voraussetzung der homogenen Ausleuchtung nicht erfüllt ist. Dabei ist zum Einen zu berücksichtigen, dass der zentrale Bereich mit höherer Intensität ausgeleuchtet ist als der Randbereich. Im in Fig. 1 gezeigten Beispiel wird beispielsweise der zentrale grünsensitive Pixel 20 mit hoher Intensität beleuchtet, die diesem benachbarten blausensitiven Pixel mit geringerer Intensität. Da diese (ebenso wie die benachbarten rotsensitiven Pixel) zur Farbinterpolation durch die Kamera verwendet werden, führt dies dazu, dass der von der Kamera dem geometrischen Ort des zentralen grünsensitiven Pixels zugeordnete Farbwert verfälscht ist (eine zu starke grüne Komponente besitzt).

Zusätzlich variiert das Verhältnis der Flächen der beleuchteten Pixel unterschiedlicher spektraler Sensitivität von Lichtleitfaser zu Lichtleitfaser. Dieses ändert sich auch bei Einsatz unterschiedlicher optischer Fasern bzw. bei Variation des geometrischen Abstands des Faserbündels zur Sensorelementanordnung. Während beispielsweise bei der Lichtleitfaserkontur 14 das Verhältnis der näherungsweise vollständig von der Lichtleitfaser beleuchteten grünen Sensorelementen zum Verhältnis der näherungsweise vollständig beleuchteten roten Sensorelemente zirka 8/4 beträgt, würde sich dieses Flächenverhältnis bei der beispielhaft eingezeichneten Kontur 16 auf 4/1 erhöhen, was unweigerlich eine Grün-Verschiebung zur Folge hätte.

Um den Effekt dieser Chrominanzverschiebung zu kompensieren, wird in den folgenden Absätzen ein mehrstufiges Verfahren zur Korrektur der Farbverschiebung in faseroptischen Systemen sowie eine dazu korrespondierenden Vorrichtung beschrieben.

Dabei sollen im Folgenden, wie in Fig. 1 dargestellt, nur diejenigen Sensorelemente betrachtet werden, die von der ihnen zugeordneten Lichtleitfaser beleuchtet werden. Im Graustufenbild (10) von Fig. 1 sind dies beispielsweise die mit der Kontur 22 (SE) umrandeten Sensorelemente. Diese Auswahl ist nur beispielhaft zu verstehen. Bezüglich der Randpixel besteht hier eine gewisse Freiheit und diese könnten in die im Folgenden Betrachtungen ebenfalls eingeschlossen werden, d. h. es könnten alle Pixel betrachtet werden, auch wenn diese lediglich eine äußerst geringe geometrisch Überdeckung mit der Kontur der Lichtleitfaser aufweisen. Für die Anwendung des im Folgenden beschriebenen Algorithmus ist die exakte Kontur nicht wesentlich, es ist jedoch erforderlich, dass sich diese nach der Kalibration nicht mehr verändern.

Zunächst ist es erforderlich, die von einer Lichtleitfaser beleuchteten Sensorelemente, also die Kontur 22 (SE) zu finden und festzulegen. Dies ist mit einer Genauigkeit, die die geometrische Ausdehnung der einzelnen Sensorelemente übersteigt, möglich. Beispielsweise kann das Zentrum der einer Faser zugeordneten Lichtverteilung durch gewichtete Summation der Intensitäten der einzelnen Sensorelemente bestimmt werden, oder es kann eine 2-dimensionale Intensitätsverteilungsfunktion an die von einem Sensor beobachtete Intensitätsverteilung angepasst wird, aus deren Parametern sich das Zentrum der Lichtverteilung bestimmen lässt.

Ein erster Schritt der Initialisierung umfasst also die subpixelgenaue Faserregistrierung. Eine daran anschließende Farbkalibrierung zur Berechnung von Korrekturfaktoren bzw. Kalibrationswerten wird weiter unten noch detaillierter beschrieben. Für die Initialisierung bzw. die Kalibration wird beispielsweise und ohne Beschränkung der Allgemeinheit ein Weißbild aufgezeichnet, welches im Folgenden den Index k tragen soll. Die Intensitätswerte bzw. die Faserbereiche in diesem Bild dürfen dabei keine Sättigung zeigen, d. h. der Maximalwert der Intensität im Bild darf den maximalen Wert der Sensorauflösung bzw. den maximalen, von der Digitalisierungstiefe abhängigen, Zahlenwert nicht überschreiten.

Den folgenden Überlegungen sei vorausgeschickt, dass die Initialisierung theoretisch lediglich einmalig ausgeführt werden muss. Allerdings kann in der Praxis eine Neupositionierung bzw. Dispositionierung zwischen Faser-Querschnitt (Fiberskop) und Sensor eine wiederholte Initialisierung erforderlich machen. Um einer solchen möglichen Verfälschung vorzugreifen, kann die Initialisierung auch regelmäßig zum Nachkalibrieren wiederholt werden.

Bezüglich der Faserregistrierung, also der Bestimmung der Fasermittelpunkte auf der Sensoroberfläche und der mittels einer Faser ausgeleuchteten Sensorelemente ist noch anzumerken, dass auf dem Markt erhältliche Kameras bzw. Sensorelementanordnungen üblicherweise mit einer Quantisierung von acht Bit arbeiten. Neuere Kameras bieten allerdings zunehmend die Möglichkeit, Bilddaten mit einer höheren Quantisierung zu erfassen, wie beispielsweise mit 12, 14 oder 16 Bit. Bei verwenden einer höheren Quantisierungstiefe kann der Ort des Zentrums einer Lichtleitfaser mit höherer Präzision bestimmt werden, so dass bei einigen Ausführungsbeispielen der vorliegenden Erfindung die Lokalisation der Faserzentren auf Grundlage der hoch aufgelösten Graustufenwerte erfolgen kann, worauf hin die nachgeschaltete Farbkalibration auf Grundlage einer niedriger aufgelösten Repräsentation des aufgenommenen Bildes durchgeführt wird.

Bei Beleuchtung mit weißem Licht kann unter Annahme einer gleichmäßigen Farbzusammensetzung des weißen Lichts und identischer maximaler Empfindlichkeit der den jeweiligen Spektralbereichen zugeordneten Sensorelemente die Bestimmung der Faserzentren beispielsweise durch Anpassen einer einzigen Intesitätsverteilung an das aufgezeichnete Intensitätsmuster erfolgen, da unter den oben gemachten Annahmen jedes Sensorelements, unabhängig von seiner Farbe, auf das weiße Licht mit einer identischen Empfindlichkeit reagiert. Alternativ kann selbstverständlich auch farbiges Licht zur Bestimmung der Faserzentren verwendet werden, wobei lediglich die Kenntnis der spektralen Empfindlichkeit der einzelnen Sensorelemente erforderlich ist, um der Beleuchtung durch farbiges Licht durch aus den spektralen Empfindlichkeiten der einzelnen Sensorelemente abgeleitete Korrekturfaktoren ·Rechnung zu tragen.

Lediglich der Vollständigkeit halber sei erwähnt, dass nach der Bestimmung der Faserzentren und der im Folgenden beschriebenen Farbkorrektur eine Interpolation mehrerer aufeinander folgender Aufnahmen (beispielsweise mit Methoden der Bewegungskompensation) durchgeführt werden kann, umeine artefaktfreie, farbgetreue Abbildung der faseroptisch erfassten Szene zu erhalten.

Die nun beschriebene Korrektur des Farbfehlers wird im Folgenden, ohne Beschränkung der Allgemeinheit, für den dreikanaligen RGB-Farbraum veranschaulicht. Dabei wird bei den folgenden Betrachtungen auf die Fig. 1 gezeigten Merkmale, und dabei insbesondere auf den in der Graustufenabbildung 10 mit f bezeichneten durch die Lichtleitfaser abgedeckten Bereich 14 von Sensorelementen SE Bezug genommen. Dabei ist für die einzelnen Farbkanäle, die im Folgenden mit R, G und B bezeichnet werden, die im rechten Bildteil dargestellte schematische Darstellung eines CCD-Kamerasensors mit dem RGB-Bayer-Muster maßgeblich.

Für einen solchen Sensor kann das Intensitätsbild mit hoher Quantisierung, also hoher Auflösung erzeugt werden und die im Folgenden beschriebene Farbkorrektur kann auf den feinquantisierten Daten durchgeführt werden.

Für eine potentielle Nachbearbeitung mittels Bewegungskompensation sei noch darauf hingewiesen, dass diese nicht nur basierend auf den bestimmten Koordinaten der Faserzentren erfolgen kann, sondern beispielsweise auch auf den Pixeln des örtlich höher aufgelösten Grünkanals.

Wie bereits erwähnt, soll die Information über die Position der Faserzentren und die Beschaffenheit der Faserform im Folgenden als bekannt vorausgesetzt werden.

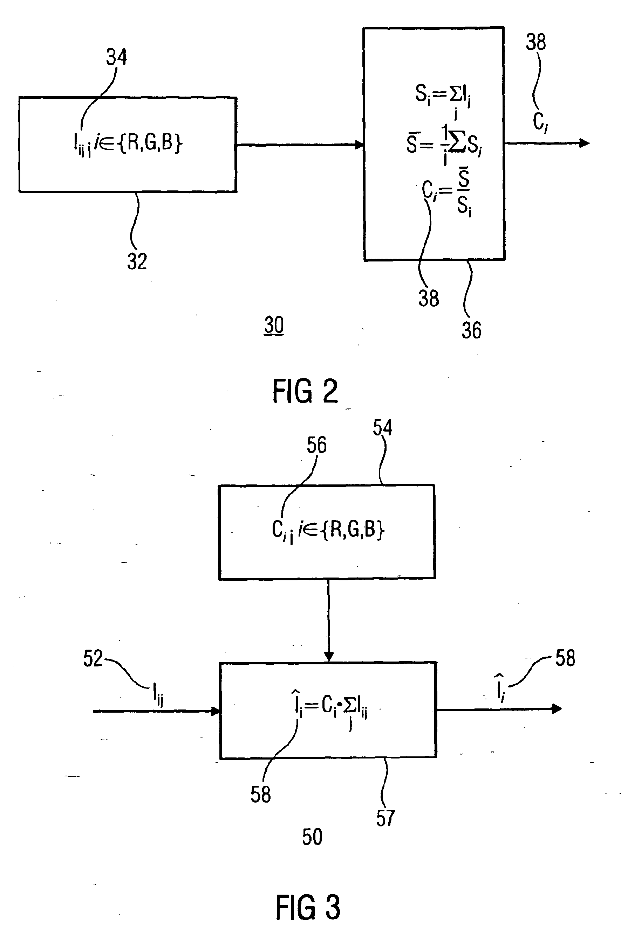

Fig. 2 zeigt exemplarisch eine schematische Darstellung eines Beispiels einer Kalibrationsvorrichtung zum Bestimmen eines einer Lichtleitfaser eines Fiberskops zugeordneten Kalibrationswerts für jeden Spektralbereich einer Menge von Sensorspektralbereichen der Sensorelementanordnung, die aus auf jeweils einen Spektralbereich sensitiven Sensorelementen besteht.

Die Kalibrationsvorrichtung 30 weist eine Erfassungseinrichtung 32 auf, um Intensitätswerte 34 ($I_{ij}$) für alle von der Lichtleitfaser mit Licht bekannter spektraler Zusammensetzung beleuchteten Sensorelemente zu erfassen. Dabei soll hier und im Folgenden der Index i den betrachteten Sensorspektralbereich und der Index j ein spezifisches Pixel des betrachteten Sensorspektralbereiches bezeichnen, das von der jeweiligen Lichtleitfaser beleuchtet wird.

Die Kalibrationsvorrichtung 30 weist ferner eine Auswerteeinrichtung 36 auf, um den jeweiligen Spektralbereichen zugeordnete Kalibrationswerte 38 $C_i$ zu bestimmen, so dass ein Farbwert, der aus den mit den jeweiligen Kalibrationswerten gewichteten Intensitätswerten der Sensorelemente gebildet werden kann, die spektrale Zusammensetzung des Lichts beschreibt. Die Farbkalibrierung dient also der Berechnung der Korrekturfaktoren bzw. der Kalibrationswerte $C_i$ 38.

Vorausgesetzt ist die Information der Faserregistrierung, aufgrund derer nun alle Sensorelemente SE ihrer nächstliegenden Faser f zugeordnet werden können, wie dies beispielsweise Fig. 1 zu entnehmen ist. Für ein Weißbild mit dem Index k, also eine Belichtung mit weißem Licht, sind dies für die Faser f aus der Menge aller Fasern F die Elemente

$$SE^{k,f} \text{ mit } f \in F.$$

Die Auswerteeinrichtung 36 soll Kalibrationswerte derart erzeugen, dass ein kalibrierter Farbwert die spektrale Zusammensetzung des Lichts beschreibt. Dies kann beispielsweise erreicht werden, indem eine gewichtete Summe der Intensitätswerte der zu den jeweiligen Kalibrationswerten korrespondierenden Sensorelemente betrachtet wird.

So können pro Farbkanal die Intensitäten der zugeordneten Sensorelemente SE zu einer Summe S aufsummiert werden:

$$S_i^{k,f} = \sum I_i^{k,f} \text{ mit } i \in \{R, G, B\} \text{ und } f \in F.$$

Daraus lässt sich eine mittlere Intensität $\overline{S}$, also die Sollintensität, mit der jede Farbe, also jeder Spektralbereich, nach der Kalibration zum Farbwert beitragen soll, gemäß folgender Formel errechnen:

$$\overline{S}^{k,f} = \frac{1}{3} \sum S_i^{k,f} \text{ mit } i \in \{R, G, B\} \text{ und } f \in F.$$

Aus der tatsächlichen Intensität der Sensorelemente S der so berechneten mittleren Intensität lässt sich gemäß folgender Gleichung

$$C_i^f = \frac{\overline{S}^{k,f}}{S_i^{k,f}} \text{ mit } i \in \{R, G, B\} \text{ und } f \in F.$$

Ein Korrekturfaktor $C_i$ bzw. ein Kalibrationswert $C_i$ für jeden Spektralbereich der Menge von Sensorspektralbereichen, also für R, G, und B berechnen. Bei der Bildverarbeitung führt die Multiplikation der aufgenommen Intensitätswerte mit diesem Korrekturfaktor dazu, dass die Farbverschiebungen, die auf den oben beschriebenen Effekten beruht, rückgängig gemacht wird, so dass ein farbtreues Bild erhalten werden kann.

Fig. 3 zeigt ein Beispiel für eine Vorrichtung 50 zum Erzeugen eines einer Lichtleitfaser eines Fiberskops zugeordneten Farbwertes, basierend auf Intensitätswerten 52 ($I_{ij}$) einer Mehrzahl von auf jeweils einen Spektralbereich aus einer Menge von Sensorspektralbereichen sensitiven Sensorelemente einer Sensorelementanordnung. Die Vorrichtung 50 weist eine Bereitstellungseinrichtung 54 auf, um die beispielsweise mit der Kalibrationsvorrichtung 30 erzeugten Kalibrationswerte 56 für jeden der Spektralbereiche (R, G, B) zur Verfügung zu stellen. Die Vorrichtung 50 weist ferner eine Korrektureinrichtung 57 auf, um die Intensitätswerte 52 aller von dem Lichtleiter beleuchteten Sensorelemente des jeweiligen Spektralbereichs und des dem jeweiligen Spektralbereich zugeordneten Kalibrierungswerts 56 zu kombinieren, um einen der Lichtleitfaser zugeordneten Farbwert 58 zu erhalten.

Die im Folgenden detaillierter beschriebenen Schritte zur Erzeugung eines Farbwerts können für Einzelbilder oder für ganze Sequenzen von Bildern durchgeführt werden. Eine solche Sequenz kann dabei ihren Ursprung in einem Life-Stream, also in zeitnah aufgenommenen Bildsequenzen, in Archivbildern, in einem Bildstack oder ähnlichem haben. Ohne Beschränkung der Allgemeinheit wird das Verfahren jedoch lediglich anhand eines Einzelbildes, welches den Index k tragen soll, erläutert.

Die Korrektureinrichtung 57 ist ausgebildet, um für die zugeordneten $SE_i^{k,f}$ einer Faser f im aktuellen Bild pro Kanal i deren Intensität I zur Summe S aufzusummieren:

$$S_i^{k,f} = \sum I_i^{k,f} \text{ mit } i \in \{R, G, B\} \text{ und } f \in F.$$

Ferner wird von der Korrektureinrichtung 57 die korrigierte Intensität $\hat{I}$ für den Kanal i einer Faser f aus dem aktuellen Bild k aus dem Produkt der Summe $S_i^{k,f}$ und dem Korrekturfaktor $C_i^f$ wie folgt berechnet:

$$\hat{I}_i^{k,f} = S_i^{k,f} \cdot C_i^f \text{ mit } i \in \{R, G, B\} \text{ und } f \in F.$$

Nach der Korrektur bzw. der Kombination der Intensitätswerte mit dem Kalibrationswert kann der Faser f nun ein Farbwert $V_{color}$ zugewiesen werden, der beispielsweise durch das Tripel der korrigierten Intensitätswerte 58 gebildet ist:

$$V_{C_{color}}^{k,f} = (I_R, I_G, I_B)^{k,f} \text{ für } f \in F.$$

Wie bereits erwähnt, ist die Verwendung des RGB-Farbraums und der in den vorhergehenden Figuren beschriebenen Sensorelementanordnungen lediglich exemplarisch. Die Anwendung des erfindungsgemäßen Konzeptes auf einen anderen Farbraum würde demzufolge ebenfalls zu einem korrigierten Farbwert führen, der lediglich eine andere Parametrisierung beschreibt.

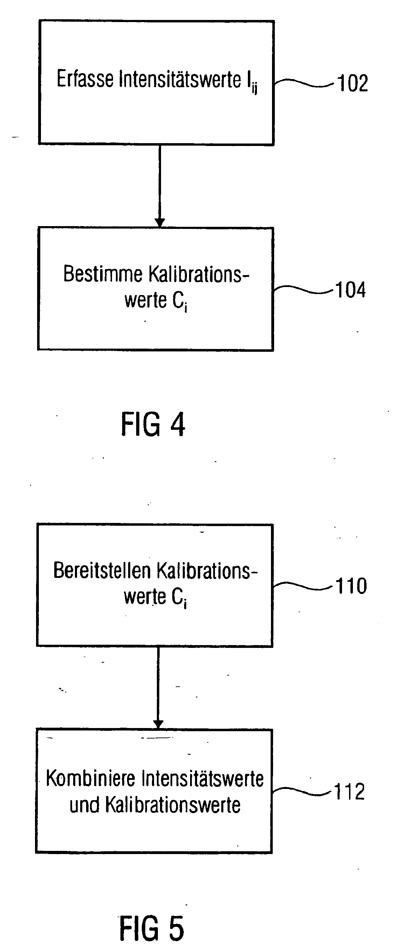

Fig. 4 zeigt ein Beispiel für ein Verfahren zum Bestimmen eines einer Lichtleitfaser eines Fiberskops zugeordneten Kalibrationswerts für jeden Spektralbereich einer Menge von Sensorspektralbereichen einer Sensorelementanordnung aus auf jeweils einen Spektralbereich sensitiven Sensorelementen.

In einem Erfassungsschritt 102 werden Intensitätswerte für alle von der Lichtleitfaser mit Licht bekannter spektraler Zusammensetzung beleuchteten Sensorelemente erfasst.

In einem Kalibrationsschritt 104 werden den jeweiligen Spektralbereichen zugeordneten Kalibrationswerte bestimmt, so dass ein Farbwert, der aus den mit den jeweiligen Kalibrationswerten kombinierten Intensitätswerten der Sensorelemente gebildet werden kann, die spektrale Zusammensetzung des Lichtes beschreibt.

Fig. 5 zeigt ein Beispiel eines Verfahrens zum Erzeugen eines einer Lichtleitfaser eines Fiberskops zugeordneten Farbwertes, basierend auf Intensitätswerten einer Mehrzahl von auf jeweils einen Spektralbereich aus einer Menge von Sensorspektralbereichen sensitiven Sensorelementen einer Sensorelementanordnung.

In einem Bereitstellungsschritt 110 werden einer Lichtleitfaser zugeordnete Kalibrationswerte für jeden der Sensorspektralbereiche bereitgestellt.

In einem Korrekturschritt 112 werden die Intensitätswerte aller von dem Lichtleiter beleuchteten Sensorelemente des jeweiligen Spektralbereichs und die dem jeweiligen Spektralbereich zugeordneten Kalibrierungswerte kombiniert, um den der Lichtleitfaser zugeordneten Farbwert zu erhalten.

Wie bereits erwähnt kann nach der Farbkorrektur in der Weiterverarbeitung der fiberskopischen Aufnahmen eine Interpolation der Farbaufnahmen durchgeführt werden, um ein strukturfreies Bild zu erhalten. Alternativ kann auch eine Bewegungskompensation einer bewegten Bildsequenz dazu verwendet werden, die Strukturen, die durch die geometrische Anordnung der Lichtleitfasern im Faserbündel hervorgerufen werden, zu entfernen. Dabei kann jeder der dazu verwendeten Algorithmen anstatt einer einzelnen Graustufenamplitude den Farbwert bzw. den korrigierten Farbwert $V_{color}$ für jede Faser verwenden. Werden die vorhergehenden Schritte mit hoher Genauigkeit (beispielsweise mit Quantisierungen von 10, 12 oder 16 Bit) durchgeführt, kann eine Diskretisierung auf eine niedrige Quantisierung am Ende der Interpolationsalgorithmen stattfinden, so dass sämtlichen vorhergehenden Schritt mit höherer Genauigkeit durchgeführt werden und ein verlustbehafteter Requantisierungsschritt erst am Ende der Bearbeitungskette erfolgt. Eine solche Requantisierung kann beispielsweise erforderlich sein, um die Ergebnisse der oben beschriebenen Bildverbesserungsmaßnahmen auf einem Acht-Bit-Monitor darzustellen. Eine solche Diskretisierung kann jedoch auch vollständig entfallen, wenn hoch aufgelöste Reproduktionsmedien zur Verfügung stehen, oder an anderer Stelle erfolgen.

Zusätzlich zu einem spektralen Korrekturfaktor kann die durch die Registrierung bekannte Intesitätsverteilung (beispielsweise eine Gauss-Verteilung) zur zusätzlichen Gewichtung der Korrekturfaktoren verwendet werden. Bei der Summierung der Intensitäten geht dann jedes Sensorelement als gewichtetes Flächenintegral in die zu berechnende und mit dem (spektralen) Korrekturfaktor zu gewichtenden Summe ein.

Wie bereits beschrieben, können Korrekturfaktoren zur spektralen Korrektur auch mit anderen Algorithmen, beispielsweise mit einem histogramm-basierten Ansatz gewonnen werden. Die Berechnung der Korrektur der Farbverschiebung kann auch von einer speziell programmierbaren Grafikhardware, also der GPU einer Graphikkarte, unterstützt werden bzw. kann diese eventuell auch vollständig von der Graphikhardware durchgeführt werden, um eine Echtzeitverarbeitung zu ermöglichen. Ferner kann das erfindungsgemäße Konzept beispielsweise in einer intelligenten Kamera, also in einer Kamera, die ebenfalls interne Rechenkapazität umfasst, integriert werden. Alternativ kann das Verfahren auch auf einem FPGA (Field Programmable Gate Array; Benutzer-programmierbare Logikgatter Anordnung) umgesetzt, bzw. für diesen programmiert werden, um die Bearbeitungsgeschwindigkeit zu erhöhen und eine Echtzeitverarbeitung zu ermöglichen.

Abhängig von den Gegebenheiten kann das erfindungsgemäße Verfahren zum Erzeugen eines einer Lichtleitfaser eines Fiberskops zugeordneten Farbwertes oder das Verfahren zum Bestimmen eines einer Lichtleitfaser eines Fiberskops zugeordneten Kalibrationswerts in Hardware oder in Software implementiert werden. Die Implementation kann auf einem digitalen Speichermedium, insbesondere einer Diskette oder CD mit elektronisch auslesbaren Steuersignalen erfolgen, die so mit einem programmierbaren Computersystem zusammenwirken können, dass die erfindungsgemäßen Verfahren ausgeführt werden. Allgemein besteht die Erfindung somit auch in einem Computer-Programm-Produkt mit einem auf einem maschinenlesbaren Träger gespeicherten Programmcode zur Durchführung des erfindungsgemäßen Verfahrens, wenn das Computer-Programm-Produkt auf einem Rechner abläuft. In anderen Worten ausgedrückt kann die Erfindung somit als ein Computer-Programm mit einem Programmcode zur Durchführung des Verfahrens realisiert werden, wenn das Computer-Programm auf einem Computer abläuft.

**Patentansprüche**

1. Vorrichtung (50) zum Erzeugen eines Farbwertes (58), der einer Lichtleitfaser eines Fiberskops, die auf mehrere Sensorelemente einer Sensorelementanordnung abgebildet wird, zugeordnet ist, basierend auf Intensitätswerten (52) einer Mehrzahl von auf jeweils einen Spektralbereich aus einer Menge von Sensorspektralbereichen sensitiven Sensorelementen (22) der Sensorelementanordnung (10), mit folgenden Merkmalen:

   einer Bereitstellungseinrichtung (54) zum Bereitstellen eines der Lichtleitfaser zugeordneten Kalibrationswerts (56) für jeden der Sensorspektralbereiche; und
   einer Korrektureinrichtung (57) zum Kombinieren der Intensitätswerte (52) aller von der Lichtleitfaser beleuchteten Sensorelemente (22) des jeweiligen Spektralbereichs, wobei die Korrektureinrichtung ausgebildet ist, eine Summe der Intensitätswerte (52) der Sensorelemente des jeweiligen Sensorspektralbereichs mit den den jeweiligen Sensorspektralbereichen zugeordneten Kalibrationswerten (56) zu gewichten, um den der Lichtleitfaser zugeordneten Farbwert (58) zu erhalten.

2. Vorrichtung (50) gemäß Anspruch 1, bei der die Korrektureinrichtung (57) ausgebildet ist, um die Intensitätswerte $I_i$ (52) der Sensorelemente des jeweiligen Sensorspektralbereichs und die dem jeweiligen Sensorspektralbereich zugeordneten Kalibrationswerte C (56) so zu einem Kombinationswert I zu kombinieren, dass die Kombination durch folgende Gleichung beschrieben werden kann:

$$I = C \times \sum_i I_i \; .$$

3. Vorrichtung (50) gemäß Anspruch 1 oder 2, bei der die Bereitstellungseinrichtung (54) zusätzlich ausgebildet ist, um für jedes Sensorelement einen Profilgewichtungsfaktor bereitzustellen, der eine 2-dimensionale Intensitätsverteilung aller von dem Lichtleiter beleuchteten Sensorelemente beschreibt.

4. Vorrichtung (50) gemäß einem der vorhergehenden Ansprüche, bei der die Korrektureinrichtung ausgebildet ist, als der Lichtleitfaser zugeordneten Farbwert ein Wertetupel von durch die Kombination erhaltenen korrigierten Intensitätswerten aller Sensorspektralbereiche zur Verfügung zu stellen.

5. Vorrichtung (50) gemäß einem der vorhergehenden Ansprüche, bei der die Bereitstellungseinrichtung (54) ausgebildet ist, je einen Kalibrationswert (56) für einen roten, einen grünen und einen blauen Sensorspektralbereich bereitzustellen.

6. Vorrichtung (50) gemäß einem der vorhergehenden Ansprüche, die ausgebildet ist, für jede Lichtleitfaser des Fiberskops einen zugeordneten Farbwert zu erzeugen.

7. Kalibrationsvorrichtung (30) zum Bestimmen eines einer Lichtleitfaser eines Fiberskops zugeordneten Kalibrationswerts (38) für jeden Spektralbereich einer Menge von Sensorspektralbereichen einer Sensorelementanordnung aus auf jeweils einen Sensorspektralbereich sensitiven Sensorelementen für eine Lichtleitfaser, die auf mehrere Sensorelemente der Sensorelementanordnung abgebildet wird, mit folgenden Merkmalen:

einer Erfassungseinrichtung (32), um Intensitätswerte (34) für alle von der Lichtleitfaser mit Licht bekannter spektraler Zusammensetzung beleuchteten Sensorelemente zu erfassen; und
einer Auswerteeinrichtung (36) zum Bestimmen der den jeweiligen Sensorspektralbereichen zugeordneten Kalibrationswerte (38), so dass ein Farbwert, der aus einer mit den jeweiligen Kalibrationswerten (38) gewichteten Summe der Intensitätswerte (34) der Sensorelemente des jeweiligen Sensorspektralbereichs gebildet wird, die spektrale Zusammensetzung des Lichtes beschreibt.

8. Kalibrationsvorrichtung (30) gemäß Anspruch 7, bei der die Auswerteeinrichtung ausgebildet ist, je einen Kalibrationswert für eine roten, einen grünen und einen blauen Sensorspektralbereich zu bestimmen.

9. Kalibrationsvorrichtung (30) gemäß Anspruch 8, bei der die Auswerteeinrichtung ausgebildet ist, die Kalibrationswerte so zu bestimmen, dass eine mit den jeweiligen Kalibrationswerten (38) gewichtete Summe der Intensitätswerte (34) der zu den jeweiligen Sensorpektralbereichen (38) korrespondierenden Sensorelemente für alle Sensorpektralbereiche identisch ist.

10. Kalibrationsvorrichtung (30) gemäß Anspruch 9, bei der die Auswerteeinrichtung (36) ausgebildet ist, die Kalibrationswerte so zu bestimmen, dass die mit den jeweiligen Kalibrationswerten (38) gewichteten Summen der Intensitätswerte (34) der zu den jeweiligen Sensorspektralbereichen korrespondierenden Sensorelemente dem durch die Anzahl der Sensorspektralbereiche definierten Bruchteil der Summe der Intensitätswerte (34) aller von der Lichtleitfaser beleuchteten Sensorelemente entspricht.

11. Kalibrationsvorrichtung (30) gemäß einem der Ansprüche 7 bis 10, bei der die Auswerteeinrichtung (36) ausgebildet ist, die Kalibrationswerte $C_i$ (38) für die i Sensorspektralbereiche aus der Summe der erfassten Intensitätswerte $I_{ij}$ (34) der einem Sensorpektralbereich zugeordneten Sensorelemente

$$S_i = \sum_j I_{ij}$$

und einer erfassten mittleren Intensität

$$\bar{S} = \frac{1}{i} \times \sum_i S_i$$

derart zu bestimmen, dass die Bestimmung durch folgende Gleichung beschrieben werden kann:

$$C_i = \frac{\bar{S}}{S_i} \; .$$

12. Kalibrationsvorrichtung (30) gemäß einem der Ansprüche 7 bis 11, die ausgebildet ist, Kalibrationswerte für jede der Lichtleitfasern des Fiberskops zu bestimmen.

13. Verfahren zum Erzeugen eines Farbwertes (58), der einer Lichtleitfaser eines Fiberskops, die auf mehrere Sensorelemente einer Sensorelementanordnung abgebildet - wird, zugeordnet ist, basierend auf Intensitätswerten einer Mehrzahl von auf jeweils einen Spektralbereich aus einer Menge von Sensorspektralbereichen sensitiven Sensorelementen der Sensorelementanordnung, mit folgenden Schritten:

Bereitstellen eines der Lichtleitfaser zugeordneten Kalibrationswerts für jeden der Sensorspektralbereiche; und
Gewichten einer Summe der Intensitätswerte (52) aller von der Lichtleitfaser beleuchteten Sensorelemente des jeweiligen Serisorspektralbereichs mit den den jeweiligen Sensorspektralbereichen zugeordneten Kalibrationswerten (56), um den der Lichtleitfaser zugeordneten Farbwert (58) zu erhalten.

14. Verfahren zum Bestimmen eines einer Lichtleitfaser eines Fiberskops zugeordneten Kalibrationswerts für jeden Spektralbereich einer Menge von Sensorspektralbereichen einer Sensorelementanordnung aus auf jeweils einen Sensorspektralbereich sensitiven Sensorelementen für eine Lichtleitfaser, die auf mehrere Sensorelemente der Sensorelementanordnung abgebildet wird, mit folgenden Schritten:

Erfassen von Intensitätswerten für alle von der Lichtleitfaser mit Licht bekannter spektraler Zusammensetzung beleuchtete Sensorelemente; und
Bestimmen der den jeweiligen Sensorspektralbereichen zugeordneten Kalibrationswerte, so dass ein Farbwert, der aus einer mit den jeweiligen Kalibrationswerten (38) gewichteten Summe der Intensitätswerte (34) der Sensorelemente des jeweiligen Sensorspektralbereichs gebildet wird, die spektrale Zusammensetzung des Lichtes beschreibt.

15. Computerprogramm mit einem Programmcode zur Durchführung des Verfahrens nach Anspruch 13 oder 14, wenn das Programm auf einem Computer abläuft.

**Claims**

1. Device (50) for generating a color value (58) associated with an optical fiber of a fiberscope mapped to several sensor elements of a sensor element arrangement, based on intensity values (52) of a plurality of sensor elements (22) of the sensor element arrangement (10) that are sensitive to one spectral region each from a set of sensor spectral regions, comprising:

providing means (54) for providing a calibration value (56) associated with the optical fiber for each of the sensor spectral regions; and
correcting means (57) for combining the intensity values (52) of all sensor elements (22) of the respective spectral region illuminated by the optical fiber wherein the correcting means is formed to weight a sum of the intensity values (52) of the sensor elements of the respective sensor spectral region with the calibration values (56) associated with the respective sensor spectral regions, in order to obtain the color value (58) associated with the optical fiber.

2. Device (50) according to claim 1, wherein the correcting means (57) is formed to combine the intensity values $I_i$ (52) of the sensor elements of the respective sensor spectral region and the calibration values C-(56) associated with the respective sensor spectral region to a combination value I so that the combination can be described by the following equation:

$$I = C \times \sum_i I_i \,.$$

3.  Device (50) according to claim 1 or 2, wherein the providing means (54) is additionally formed to provide, for each sensor element, a profile weighting factor, which describes a two-dimensional intensity distribution of all sensor elements illuminated by the light guide.

4.  Device (50) according to one of the preceding claims, wherein the correcting means is formed to provide, as a color value associated with the optical fiber, a value tuple of corrected intensity values of all sensor spectral regions obtained through the combination.

5.  Device (50) according to one of the preceding claims, wherein the providing means (54) is formed to provide a calibration value (56) each for a red, a green and a blue sensor spectral region.

6.  Device (50) according to one of the preceding claims, which is formed to generate an associated color value for each optical fiber of the fiberscope.

7.  Calibration device (30) for determining a calibration value (38) associated with an optical fiber of a fiberscope for each spectral region of a set of sensor spectral regions of a sensor element arrangement of sensor elements sensitive to one sensor spectral region each for an optical fiber mapped to several sensor elements of the sensor element arrangement, comprising:

    detecting means (32) to detect intensity values (34) for all sensor elements illuminated with light of known spectral composition by the optical fiber; and
    evaluating means (36) for determining the calibration values (38) associated with the respective sensor spectral regions, so that a color value, which is formed from a sum of the intensity values (34) of the sensor elements of the respective sensor spectral region weighted with the respective calibration values (38), describes the spectral composition of the light.

8.  Calibration device (30) according to claim 7, wherein the evaluating means is formed to determine a calibration value each for a red, a green and a blue sensor spectral region.

9.  Calibration device (30) according to claim 8, wherein the evaluating means is formed to determine the calibration values so that a sum of the intensity values (34) of the sensor elements corresponding to the respective sensor spectral regions (38), which is weighted with the respective calibration values (38), is identical for all sensor spectral regions.

10. Calibration device (30) according to claim 9, wherein the evaluating means (36) is formed to determine the calibration values so that the sums of the intensity values (34) of the sensor elements corresponding to the respective sensor spectral regions, which are weighted with the respective calibration values (38), correspond to the fraction of the sum of the intensity values (34) of all sensor elements illuminated by the optical fiber, which is defined by the number of sensor spectral regions.

11. Calibration device (30) according to one of claims 7 to 10, wherein the evaluating means (36) is formed to determine the calibration values $C_i$ (38) for the i sensor spectral regions from the sum of the detected intensity values $I_{ij}$ (34) of the sensor elements associated with a sensor spectral region

$$S_i = \sum_j I_{ij}$$

and a detected mean intensity

$$\overline{S} = \frac{1}{i} \times \sum_i S_i$$

such that the determination can be described by the following equation:

$$C_i = \frac{\overline{S}}{S_i} .$$

**12.** Calibration device (30) according to claims 7 to 11, which is formed to determine calibration values for each one of the optical fibers of the fiberscope.

**13.** Method of generating a color value (58) associated with an optical fiber of a fiberscope mapped to several sensor elements of a sensor element arrangement, based on intensity values of a plurality of sensor elements of the sensor element arrangement that are sensitive to one spectral region each from a set of sensor spectral regions, comprising:

providing a calibration value associated with the optical fiber for each of the sensor spectral regions; and weighting a sum of the intensity values (52) of all sensor elements, illuminated by the optical fiber, of the respective sensor spectral region with the calibration values (56) associated with the respective sensor spectral regions, in order to obtain the color value (58) associated with the optical fiber.

**14.** Method of determining a calibration value associated with an optical fiber of a fiberscope for each spectral region of a set of sensor spectral regions of a sensor element arrangement of sensor elements sensitive to one sensor spectral region each for an optical fiber mapped to several sensor elements of the sensor element arrangement, comprising:

detecting intensity values for all sensor elements illuminated with light of known spectral composition by the optical fiber; and
determining the calibration values associated with the respective sensor spectral regions, so that a color value, which is formed from a sum of the intensity values (34) of the sensor elements of the respective sensor spectral region weighted with the respective calibration values (38), describes the spectral composition of the light.

**15.** Computer program with a program code for performing the method according to claim 13 or 14, when the program is executed on a computer.

**Revendications**

**1.** Dispositif (50) pour générer une valeur de couleur (58) qui est associée à une fibre optique d'un fibroscope qui est reproduite sur plusieurs éléments capteurs d'un aménagement d'éléments capteurs, sur base de valeurs d'intensité (52) d'une pluralité d'éléments capteurs (22) de l'aménagement d'éléments capteurs (10) sensibles à une plage spectrale respective parmi une quantité de plages spectrales, aux caractéristiques suivantes:

un moyen de mise à disposition (54) destiné à mettre à disposition une valeur d'étalonnage (56) associée à la fibre optique pour chacune des plages spectrales de capteur; et
un moyen de correction (57) destiné à combiner les valeurs d'intensité (52) de tous les éléments capteurs (22) de la plage spectrale respective illuminés par la fibre optique, le moyen de correction étant réalisé pour pondérer une somme des valeurs d'intensité (52) des éléments capteurs de la plage spectrale respective par les valeurs d'étalonnage (56) associées aux plages spectrales de capteur respectives, pour obtenir la valeur de couleur (58) associée à la fibre optique.

**2.** Dispositif (50) selon la revendication 1, dans lequel le moyen de correction (57) est réalisé pour combiner les valeurs d'intensité $I_i$ (52) des éléments capteurs de la plage spectrale de capteur respective et les valeurs d'étalonnage C associées à la plage spectrale de capteur respective (56), pour obtenir une valeur de combinaison I, de sorte que la combinaison puisse être décrite par l'équation suivante:

$$I = C \times \sum_i I_i$$

3. Dispositif (50) selon la revendication 1 ou 2, dans lequel le moyen de mise à disposition (54) est, en outre, réalisé pour mettre à disposition, pour chaque élément capteur, un facteur de pondération de profil qui décrit une répartition d'intensité bidimensionnelle de tous les éléments capteurs illuminés par la fibre optique.

4. Dispositif (50) selon l'une des revendications précédentes, dans lequel le moyen de correction est réalisé pour mettre à disposition, comme valeur de couleur associée à la fibre optique, un tuplet de valeurs d'intensité corrigées, obtenu par la combinaison, de toutes les plages spectrales de capteur.

5. Dispositif (50) selon l'une des revendications précédentes, dans lequel le moyen de mise à disposition (54) est réalisé pour mettre à disposition chaque fois une valeur d'étalonnage (56) pour une plage spectrale de capteur rouge, une plage spectrale de capteur verte et une plage spectrale de capteur bleue.

6. Dispositif (50) selon l'une des revendications précédentes, qui est réalisé pour générer, pour chaque fibre optique du fibroscope, une valeur de couleur associée.

7. Dispositif d'étalonnage (30) pour déterminer une valeur d'étalonnage (38) associée à une fibre optique du fibroscope pour chaque plage spectrale d'une quantité de plages spectrales de capteur d'un aménagement d'éléments capteurs composée d'éléments capteurs sensibles à une plage spectrale de capteur respective pour une fibre optique qui est reproduite sur plusieurs éléments capteurs de l'aménagement d'éléments capteurs, aux caractéristiques suivantes:

   un moyen de saisie (32) destiné à saisir des valeurs d'intensité (34) pour tous les éléments capteurs illuminés par la fibre optique à l'aide de lumière de composition spectrale connue; et
   un moyen d'évaluation (36) destiné à déterminer les valeurs d'étalonnage (38) associées aux plages spectrales de capteur respectives, de sorte qu'une valeur de couleur formée à partir d'une somme des valeurs d'intensité (34), pondérée par les valeurs d'étalonnage (38) respectives, des éléments capteurs de la plage spectrale de capteur respective décrive la composition spectrale de la lumière.

8. Dispositif d'étalonnage (30) selon la revendication 7, dans lequel le moyen d'évaluation est réalisé pour déterminer chaque fois une valeur d'étalonnage pour une plage spectrale de capteur rouge, une plage spectrale de capteur verte et une plage spectrale de capteur bleue.

9. Dispositif d'étalonnage (30) selon la revendication 8, dans lequel le moyen d'évaluation est réalisé pour déterminer les valeurs d'étalonnage de sorte qu'une somme des valeurs d'intensité (34), pondérée par les valeurs d'étalonnage (38) respectives, des éléments capteurs correspondant aux plages spectrales de capteur (38) respectives soit identique pour toutes les plages spectrales de capteur.

10. Dispositif d'étalonnage (30) selon la revendication 9, dans lequel le moyen d'évaluation (36) est réalisé pour déterminer les valeurs d'étalonnage de sorte que les sommes des valeurs d'intensité (34), pondérées par les valeurs d'étalonnage (38) respectives, des éléments capteurs correspondant aux plages spectrales de capteur (38) respectives correspondent à la fraction, définie par le nombre de plages spectrales de capteur, de la somme des valeurs d'intensité (34) de tous les éléments capteurs illuminés par la fibre optique.

11. Dispositif d'étalonnage (30) selon l'une des revendications 7 à 10, dans lequel le moyen d'évaluation (36) est réalisé pour déterminer les valeurs d'étalonnage $C_i$ (38) pour les $i$ plages spectrales de capteur à partir de la somme des valeurs d'intensité $I_{ij}$ (34) saisies des éléments capteurs associés à une plage spectrale de capteur

$$S_i = \sum_j I_{ij}$$

et d'une intensité moyenne saisie

$$\bar{S} = \frac{1}{i} \times \sum_i S_i$$

de sorte que la détermination puisse être décrite par l'équation suivante:

$$C_i = \frac{\bar{S}}{S_i}$$

**12.** Dispositif d'étalonnage (30) selon l'une des revendications 7 à 11, qui est conçu pour déterminer des valeurs d'étalonnage pour chacune des fibres optiques du fibroscope.

**13.** Procédé pour générer une valeur de couleur (58) qui est associée à une fibre optique d'un fibroscope qui est reproduite sur plusieurs éléments capteurs d'un aménagement d'éléments capteurs, sur base de valeurs d'intensité d'une pluralité d'éléments capteurs de l'aménagement d'éléments capteurs sensibles à une plage spectrale respective parmi une quantité de plages spectrales, aux étapes suivantes consistant à:

mettre à disposition une valeur d'étalonnage associée à la fibre optique pour chacune des plages spectrales de capteur; et
pondérer une somme des valeurs d'intensité (52) de tous les éléments capteurs de la plage spectrale respective illuminés par la fibre optique par les valeurs d'étalonnage (56) associées aux plages spectrales de capteur respectives, pour obtenir la valeur de couleur (58) associée à la fibre optique.

**14.** Procédé pour déterminer une valeur d'étalonnage associée à une fibre optique d'un fibroscope pour chaque plage spectrale d'une quantité de plages spectrales de capteur d'un aménagement d'éléments capteurs composée d'éléments capteurs sensibles à une plage spectrale de capteur respective pour une fibre optique qui est reproduite sur plusieurs éléments capteurs de l'aménagement d'éléments capteurs, aux étapes suivantes consistant à:

saisir des valeurs d'intensité pour tous les éléments capteurs illuminés par la fibre optique à l'aide de lumière de composition spectrale connue; et
déterminer les valeurs d'étalonnage associées aux plages spectrales de capteur respectives, de sorte qu'une valeur de couleur formée à partir d'une somme des valeurs d'intensité (34), pondérée par les valeurs d'étalonnage (38) respectives, des éléments capteurs de la plage spectrale de capteur respective décrive la composition spectrale de la lumière.

**15.** Programme d'ordinateur avec un code de programme pour réaliser le procédé selon la revendication 13 ou 14 lorsque le programme est exécuté sur un ordinateur.

FIG 1

FIG 2

FIG 3

Erfasse Intensitätswerte $I_{ij}$ —102

Bestimme Kalibrationswerte $C_i$ —104

## FIG 4

Bereitstellen Kalibrationswerte $C_i$ —110

Kombiniere Intensitätswerte
und Kalibrationswerte —112

## FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4318140 A1
- JP 08101439 A
- JP 08191440 A